(19) Europäisches Patentamt
European Patent Office
Office européen des brevets

(11) Veröffentlichungsnummer: **0 355 334 A2**

(12) **EUROPÄISCHE PATENTANMELDUNG**

(21) Anmeldenummer: **89112036.2**

(51) Int. Cl.$^4$: **C08F 299/04 , C08L 67/06**

(22) Anmeldetag: **01.07.89**

(30) Priorität: **22.07.88 DE 3824959**

(43) Veröffentlichungstag der Anmeldung: **28.02.90 Patentblatt 90/09**

(84) Benannte Vertragsstaaten: **CH DE ES FR GB IT LI NL**

(71) Anmelder: **BASF Aktiengesellschaft**
**Carl-Bosch-Strasse 38**
**D-6700 Ludwigshafen(DE)**

(72) Erfinder: **Holoch, Jan, Dr.**
**Koenigsberger Strasse 22 a**
**D-6906 Leimen(DE)**
Erfinder: **Peter, Roland, Dr.**
**Phalzring 92**
**D-6704 Mutterstadt(DE)**

(54) **Härtbare Formmassen aus ungesättigten Polyesterharzen.**

(57) Die Erfindung betrifft härtbare Formmassen aus einem ungesättigten Polyester, Monomeren und dem Reaktionsprodukt aus Maleinsäuredihydrodicyclopentadienylmonoester und N-Hydroxyalkyltetrahydrophthalimid oder N-Hydroxyalkylendomethylentetrahydrophthalimid. Aus diesen Formmassen durch Härtung hergestellte Formstoffe haben eine sehr hohe Temperaturbeständigkeit und können z.B. als Elektroartikel oder als Automobilteile im Motorraum verwendet werden.

EP 0 355 334 A2

## Härtbare Formmassen aus ungesättigten Polyesterharzen

Formstoffe aus ungesättigten Polyesterharzen, die mit Dicyclopentadien oder dessen Derivaten modifiziert sind, weisen bekanntlich eine hohe Temperaturbeständigkeit auf. Die thermische Beständigkeit von Standard-UP-Harzen läßt sich auch durch Zumischen des Kondensationsprodukts aus 1 Mol Fumarsäure und 2 Molen 8(9)-Hydroxy-tricyclo-[5.2.1.0$^{2,6}$]dec-3-en verbessern (US-PS 4 435 530). Nachteilig ist jedoch, daß mit derartigen UP-Harzen, die einen hohen Fumar/Maleinsäuregehalt besitzen, keine klaren Lösungen erhalten werden. Teilweise treten sogar Phasentrennungen auf. Wird das Kondensationsprodukt aus 1 Mol Fumarsäure und 2 Molen N-Hydroxyalkyltetrahydrophthalimid verwendet (US-PS 4 560 768), so treten zwar keine Phasentrennungen auf, die thermische Beständigkeit ist jedoch deutlich geringer.

Der Erfindung lag also die Aufgabe zugrunde, die Temperaturbeständigkeit von Formstoffen aus UP-Harzen durch ein Additiv zu verbessern, das sich im UP-Harz ohne Trübung löst.

Überraschend wurde gefunden, daß das Reaktionsprodukt aus Maleinsäuredihydrodicyclopentadienylmonoester und N-Hydroxyalkyltetrahydrophthalimid oder N-Hydroxyalkylendomoethylentetrahydrophthalimid in allen UP-Harzen ohne Trübung mischbar ist und die thermische Beständigkeit der Formstoffe deutlich erhöht. Die Additive haben folgende chemische Strukturen:

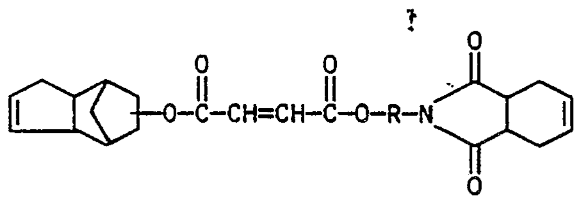

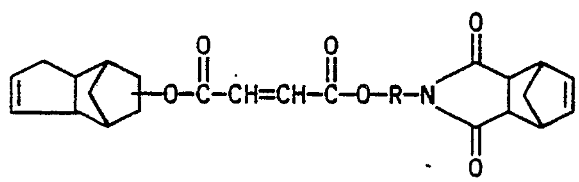

R: Alkylengruppe mit 2 - 10 C-Atomen

Zu den Komponenten ist im einzelnen zu sagen:

Als ungesättigte Polyester A eignen sich die üblichen Kondensationsprodukte aus mehrwertigen, insbesondere zweiwertigen Carbonsäuren und deren veresterbaren Derivaten, insbesondere deren Anhydride, die mit mehrwertigen, insbesondere zweiwertigen Alkoholen esterartig verknüpft sind, und gegebenenfalls zusätzliche Reste einwertiger Carbonsäuren oder einwertiger Alkohole enthalten, wobei zumindest ein Teil der Einsatzstoffe über ethylenisch ungesättigte, copolymerisationsfähige Gruppen verfügen muß.

Als Alkoholkomponenten eignen sich z.B. Ethylenglykol, Propylenglykol-1,2, Propandiol-1,3, Butandiol-1,3, Butandiol-1,4, Hexandiol-1,6, Hexantriol-1,2,6, Neopentylglykol, Diethylenglykol, Triethylenglykol, Dipropylenglykol, Cyclohexandiol-1,2, hydriertes Bisphenol A, Cyclohexandimethanol, ethoxyliertes Bisphenol A sowie Dihydroxymethyltricyclodecan, Trimethylolpropan, Glycerin und Pentaerythrit.

Geeignete Carbonsäuren bzw. deren Derivate sind zweibasische olefinisch ungesättigte Carbonsäuren, wie z.B. Maleinsäure, Fumarsäure, Chlormaleinsäure, Itaconsäure, Citraconsäure, Methylenglutarsäure und Mesaconsäure bzw. deren Ester oder vorzugsweise deren Anhydride. In die Polyester können andere modifizierend wirkende zweibasische, ungesättigte und/oder gesättigte, sowie aromatische Carbonsäuren eingebaut werden, z.B. Bernsteinsäure, Glutarsäure, Adipinsäure, Sebacinsäure, Phthalsäureanhydrid, o-Phthalsäure, Isophthalsäure, Terephthalsäure, Tetrahydrophthalsäure und Endomethylentetrahydrophthalsäure.

Die ungesättigten Polyester können mit Dicyclopentadien bzw. dessen Derivaten oder Substitutionsprodukten modifiziert sein. Diese Umsetzungen sind bekannt. Wenn man von Diestern mit hoher Säurezahl oder freier Maleinsäure ausgeht und bei Temperaturen zwischen 120 und 140 °C arbeitet, erhält man im wesentlichen eine Addition des Dicyclopentadiens an endständige Carboxyl- bzw. Hydroxylgruppen, wobei sich endständige Dihydrodicyclopentadienylether- bzw. Dihydrodicyclopentadienylestergruppen bilden. Setzt man Polyester mit niedriger Säurezahl ein und arbeitet bei höheren Temperaturen, vorzugsweise oberhalb von 170 °C, so spaltet sich das Dicyclopentadien in zwei Moleküle Cyclopentadien, welches sich an Ethylendicarbonsäureester-Strukturen des Polyesters addiert und

Endomethylentetrahydrophthalsäureester-Strukturen bildet.

Die Komponente B ist das Umsetzungsprodukt von Maleinsäuredihydrodicyclopentadienylmonoester und N-Hydroxyalkyltetrahydrophthalimid oder N-Hydroxyalkylendomethylentetrahydrophthalimid. Bevorzugt sind die N-Hydroxyethylverbindungen. Der Maleinsäuredihydrodicyclopentadienylmonoester läßt sich auf verschiedenen Wegen darstellen. Er entsteht bei der Reaktion von Maleinsäureanhydrid, Wasser und Dicyclopentadien bei 120 - 140 °C. Er ist auch durch Umsetzung von Maleinsäureanhydrid und 8(9)-Hydroxy-tricyclo[5.2.1.$0^{2,6}$]dec-3-en erhältlich. N-Hydroxyalkyltetrahydrophthalimid und N-Hydroxyalkylendomethylentetrahydrophthalimid werden durch Umsetzung der entsprechenden Anhydride mit Alkanolaminen (bevorzugt Ethanolamin) hergestellt. Die Komponente B wird in Mengen von 3 - 80 %, bevorzugt 10 - 30 %, bezogen auf A, eingesetzt.

Als copolymerisierbare, ethylenisch ungesättigte monomere Verbindungen C kommen die üblicherweise zum Herstellen ungesättigter Polyesterformmassen verwendeten Allyl- und vorzugsweise Vinylverbindungen in Frage, Vinylaromaten, wie Styrol, substituierte Styrole, wie p-Chlorstyrol oder Vinyltoluol, Ester der Acrylsäure und Methacrylsäure mit 1 bis 18 Kohlenstoffatome enthaltenden Alkoholen, wie Methacrylsäuremethylester, Acrylsäurebutylester, Ethylhexylacrylat, Hydroxypropylacrylat, Dihydrodicyclopentadienylacrylat, Butandioldiacrylat und (Meth)-acrylsäureamide, Allylester, wie Diallylphthalat, und Vinylester, wie Ethylhexansäurevinylester, Vinylacetat, Vinylpropionat, Vinylpivalat und andere. Desgleichen eignen sich Gemische der genannten olefinisch ungesättigten Monomeren. Bevorzugt geeignet als Komponente B sind Styrol, p-Methylstyrol, Chlorstyrol, Vinyltoluol, Divinylbenzol und Diallylphthalat. Die Komponente C ist in den Polyesterformmassen im allgemeinen in einer Menge von 10 bis 80, vorzugsweise von 20 bis 70 Gew.-%, bezogen auf das Gesamtgewicht der Komponenten A + B enthalten.

Die ungesättigten Polyester A sowie die Komponente B werden in einer bevorzugten Ausführungsform jeweils in dem Monomeren C gelöst, wobei vorzugsweise 30 bis 100 Gew.-Teile Monomer auf 100 Gew.-Teile Polyester bzw. 100 Gew.-Teile von Komponente B verwendet werden.

Die Formmassen aus A, B und C können übliche Zusatzstoffe und Hilfsmittel D, wie z.B. Initiatoren, Polymerisationsbeschleuniger, Inhibitoren, Gleitmittel, inerte Lösungsmittel, Füllstoffe, Verstärkungsfasern, Verdickungsmittel und schrumpfmindernde Zusätze enthalten.

Es kommen z.B. in Frage:

- Initiatoren, wie Methylethylketonperoxid, Cyclohexanonperoxid, Benzoylperoxid, tert.-Butylperoktoat, tert.-Butylperbenzoat, Dicumylperoxid, Di-tert.-Dibutylperoxid, sowie Perketale, Percarbonate, C-C-labile Verbindungen und Azoverbindungen.
- Härtungsbeschleuniger, z.B. Oktoate oder Naphthenate von Kupfer, Blei, Calcium, Magnesium, Cer und insbesondere von Mangan und Kobalt; ferner aromatische Amine, wie Dimethylanilin und Diethylanilin.
- Inhibitoren, wie Hydrochinon, substituierte Hydrochinone, Brenzkatechin, tert.-Butylbrenzkatechin, kernsubstituierte Brenzkatechine, Chinone, wie Benzochinon, Naphthochinon, Chloranilin, Nitrobenzole, wie m-Dinitrobenzol, Thiodiphenylamin, N-Nitrosoverbindungen, wie N-Nitrosodiphenylamin und Salze von N-Nitroso-N-cyclohexylhydroxylamin.
- Gleitmittel, wie Zink-, Magnesium- und Calciumstearat sowie Polyalkylenetherwachse.
- Paraffine zur Verminderung der Monomerenverdunstung und zur Ausbildung einer klebfreien Oberfläche.
- Füllstoffe, z.B. übliche feinpulvrige oder körnige anorganische Füllstoffe, wie Kreide, Kaolin, Quarzmehl, Dolomit, Schwerspat, Metallpulver, Aluminiumoxidhydrat, Zement, Talkum, Kieselgur, Holzmehl, Holzspäne, Pigmente. Sie werden in Mengen von 0 bis 250 Gew.-%, vorzugsweise 20 bis 150 Gew.-%, bezogen auf A + B + C, eingesetzt.
- Verstärkungsfasern, z.B. anorganische oder organische Fasern als Rovings oder flächige, gegebenenfalls daraus gewebte Gebilde, wie Matten, z.B. aus Glas, Kohlenstoff, Asbest, Cellulose und synthetischen organischen Fasern, wie Polycarbonsäureester, Polycarbonate und Polyamide. Die Verstärkungsfasern werden in Mengen von 5 bis 400, vorzugweise 10 bis 250 Gew.-%, bezogen auf A + B + C, eingesetzt.
- Verdickungsmittel, z.B. Oxide oder Hydroxide des Lithiums, Magnesiums, Calciums, Aluminiums oder Titans. Bevorzugt ist Magnesiumoxid. Die Verdickungsmittel werden den Formmassen in Mengen von 0,2 bis 5, vorzugsweise von 0,5 bis 3 Gew.-% bezogen auf A + B + C, zugesetzt.
- Schrumpfmindernde Polymerisate, wie Polystyrol, Polymethylmethacrylat, Polyvinylacetat, Polyethylen, Polybutadien, Polyisopren, Celluloseester, Polyvinylchlorid und entsprechende Copolymere und Pfropfcopolymere. Es eignen sich auch Kondensationspolymere, wie gesättigte Polyester oder Polyesterurethane. Die schrumpfmindernden Zusätze werden in Mengen von 0 bis 30, vorzugsweise 3 bis 20 Gew.-% bezogen auf A + B + C, eingesetzt.

Ungesättigte Polyesterharze, die das Additiv aus Maleinsäuredihydrodicyclopentadienylmonoester und N-Hydroxyalkylendomethylentetrahydrophthalimid oder N-Hydroxyalkyltetrahydrophthalimid enthalten, lassen sich zu Formteilen aushärten, die eine hohe thermische Beständigkeit besitzen. Sie können überall dort

eingesetzt werden, wo diese Eigenschaft verlangt wird, also z.B. auf dem Elektrosektor oder im Motorraum des Automobils.

Die in den Beispielen genannten Teile und Prozente beziehen sich auf das Gewicht. Die Härtungen werden mit 1 % MEKP-HA 2 (Peroxid Chemie) und 0, 1 % Kobalt-Beschleuniger (enthält 1 % Co) ausgeführt. Gemessen wurde der Gewichtsverlust der Formteile (Rundstäbe mit einem Durchmesser von 10 mm) während der Lagerung bei 220° C.

Beispiele

Additiv B

Reaktionsprodukt aus Maleinsäuredihydrodicyclopentadienylmonoester und N-Hydroxyethyltetrahydrophthalimid

1960 Teile Maleinsäureanhydrid und 2640 Teile Dicyclopentadien werden unter Rühren und Darüberleiten von Stickstoff auf 80 ° C erhitzt. 360 Teile Wasser werden langsam hinzugefügt, wobei darauf geachtet wird, daß die Temperatur nicht über 125° C steigt. Anschließend wird 2 Stunden bei 125° C und 2 Stunden bei 145° C gerührt. 4950 Teile Maleinsäuredihydrodicyclopentadienylmonoester werden als hellgelbe, teilkristalline Masse mit einer Säurezahl von 216 erhalten.

2280 Teile Tetrahydrophthalsäureanhydrid werden unter Rühren und Darüberleiten von Stickstoff auf 125° C erhitzt. Bei 125 - 145° C werden 915 Teile Ethanolamin langsam hinzugefügt. Anschließend wird auf 190° C erhitzt und 90 Minuten bei dieser Temperatur gehalten. 2900 Teile N-Hydroxyethyltetrahydrophthalimid werden als hellbraune, kristalline Masse erhalten.

2480 Teile Maleinsäuredihydrodicyclopentadienylmonoester, 1950 Teile N-Hydroxyethyltetrahydrophthalimid und 0,2 Teile Hydrochinon werden unter Rühren und Darüberleiten von Stickstoff 12 Stunden auf 190° C erhitzt. 4170 Teile des Addukts B mit einer Säurezahl 22 werden erhalten und nach Zugabe von 0,45 Teilen Hydrochinon bei 120° C mit 2100 Teilen Styrol gemischt. Die styrolische Lösung von B besitzt bei 23° C eine Viskosität von 105 mPa•s.

Additiv V1 (Vergleich)

Reaktionsprodukt aus Fumarsäure und 8(9)-Hydroxy-tricyclo[5.2.1.$0^{2,6}$]dec-3-en nach US-PS 4 435 530 (67%ige styrolische Lösung)

Additiv V2 (Vergleich)

Reaktionsprodukt aus Fumarsäure und N-Hydroxyethyltetrahydrophthalimid nach US-PS 4 560 768 (67%ige styrolische Lösung)

UP-Harz 1

Ungesättigter Polyester aus 200 Teilen Maleinsäureanhydrid, 151 Teilen Phthalsäureanhydrid und 240 Teilen Propylenglykol; 67%ige styrolische Lösung.

UP-Harz 2

Ungesättigter Polyester aus 200 Teilen Maleinsäureanhydrid und 170 Teilen Propylenglykol; 67%ige styrolische Lösung.

Die Komponenten wurden vermischt, die Mischungen gehärtet und der Gewichtsverlust (in %) nach Lagerung bei 220° C gemessen.

Tabelle 1 zeigt die Ergebnisse:

| | Beispiel 1 | Beispiel 2 (Vergleich) | Beispiel 3 (Vergleich) | Beispiel 4 (Vergleich) |
|---|---|---|---|---|
| UP-Harz 1 | 75 | 75 | 75 | 100 |
| Additiv B | 25 | - | - | - |
| Additiv V1 | - | 25 | - | - |
| Additiv V2 | - | - | 25 | - |
| nach 72 h | 2,1 | 1,8 | 4,1 | 6,5 |
| nach 168 h | 3,1 | 2,8 | 6,3 | 14,3 |

Tabelle 2 zeigt die Mischbarkeit der erfindungsgemäßen Komponenten im Vergleich zu solchen nach US-PS 4 435 530:

| | Beispiel 5 | Beispiel 6 (Vergleich) | Beispiel 7 | Beispiel 8 (Vergleich) |
|---|---|---|---|---|
| UP-Harz 1 | 80 | 80 | | |
| UP-Harz 2 | - | - | 80 | 80 |
| Additiv B | 20 | - | 20 | - |
| Additiv V1 | - | 20 | - | 20 |
| | klar | leichte Trübung | klar | starke Trübung - Phasentrennung |

## Ansprüche

Härtbare Formmassen, enthaltend

A. einen ungesättigten Polyester,

B. 3 - 80 Gew.-% bezogen auf A, des Reaktionsproduktes aus Maleinsäuredihydrodicyclopentadienylmonoester und N-Hydroxyalkyltetrahydrophthalimid oder N-Hydroxyalkylendomethylentetrahydrophthalimid, wobei die Alkylgruppen jeweils 2 bis 10 Kohlenstoffatome enthalten,

C. copolymerisierbare Monomere, und

D. übliche Zusatzstoffe und Hilfsmittel.